# EUROPÄISCHE PATENTSCHRIFT

(11) **EP 0 588 987 B1**
(45) Veröffentlichungstag und Bekanntmachung des Hinweises auf die Patenterteilung: **05.06.1996**
(21) Anmeldenummer: 92918782.1
(22) Anmeldetag: 09.09.1992
(51) Int. Cl.: A47J 31/10, A47J 31/46, A47J 31/06

(54) **BRÜHGETRÄNKEMASCHINE**
BEVERAGE BREWING MACHINE
MACHINE POUR PREPARATION D'UNE BOISSON

(30) Priorität: 13.09.1991 DE 4130446
(43) Veröffentlichungstag der Anmeldung: 30.03.1994
(60) Teilanmeldung: 95111320.8
(73) Patentinhaber: Braun Aktiengesellschaft, Frankfurt am Main (DE)
(72) Erfinder: WELLER, Albrecht, Dr., D-61449 Steinbach (DE); DRIESEN, Georges, Dr., D-61276 Weilrod (DE); PETER, Andreas, D-61476 Kronberg (DE); HERBER, Peter, D-60318 Frankfurt am Main (DE); SCHÄFER, Gerhard, D-60437 Frankfurt am Main (DE); SCHAMBERG, Stefan, D-61250 Usingen (DE); BIRK, Andreas, D-61350 Bad Homburg (DE)
(86) Internationale Anmeldenummer: EP9202082
(87) Internationale Veröffentlichungsnummer: WO9305691

(56) Entgegenhaltungen:
- EP-A- 0 091 634
- EP-A- 0 395 866
- EP-B- 0 079 235
- DE-A- 2 714 736
- DE-A- 2 821 996
- US-A- 4 056 050
- US-A- 4 064 795

## Beschreibung

Die Erfindung betrifft eine Brühgetränkemaschine nach dem Oberbegriff des Patentanspruchs 1.

Bei Brühgetränkemaschinen gemäß dem Oberbegriff des Patentanspruchs 1 kann Wasser von einer elektrischen Heizeinrichtung erhitzt werden und über ein Auslaßventil, welches erst bei Erreichen einer bestimmten Wassertemperatur seine Offenstellung einnimmt, aus dem Vorratsbehälter in eine eine Zutat, vorzugsweise Kaffeemehl oder Teeblätter, enthaltende Aufbrüheinheit abfließen, aus der es nach Extrahierung der Zutat schließlich als Brühgetränk einem Auffangbehälter zugeführt wird. Die Brühgetränkemaschine weist darüber hinaus eine Leitung auf, über die Brühwasser auch über anderen einen Weg als über die obere Fläche der Zutat aus dem Vorratsbehälter in den Auffangbehälter gelangen kann.

Eine Brühgetränkemaschine ist beispielsweise aus der DE-A-27 14 736 bekannt, bei der zur Aroma- bzw. Stärkebeeinflussung bei der Teezubereitung ein Zeitschalter vorgesehen ist, der ein Ventil zeitabhängig steuert, so daß, wenn eine bestimmte Menge an Brühwasser in das Sieb eingeflossen ist, dieser Weg versperrt wird und Brühwasser nur noch auf anderem Weg, d.h. hier am Sieb vorbei direkt in den Auffangbehälter einfließt. Durch Vorgabe der Menge an Zutaten und der Menge an verwendetem Wasser kann die gewünschte Stärke des zubereiteten Brühgetränks eingestellt werden, d. h., die Brühzeit, auf die die Vorrichtung eingestellt ist, ist für eine verwendete Zutat spezifisch und muß genau beachtet werden, weil im Falle einer zu kurz gewählten Brühzeit das Getränk nicht das richtige Aroma erhält, während es im Falle einer zulangen Brühzeit einen bitteren Geschmack aufweist.

Weiterhin ist aus der EP-0 079 235 B1 eine Kaffeemaschine bekannt, bei der der Brühvorgang dadurch erfolgt, daß aus einem Vorratsbehälter kaltes Wasser in einen Durchlauferhitzer einfließt, dort erhitzt und das dabei entstehende Brühwasser über eine Steigleitung einem Brühkopf zugeführt wird, aus dem es in eine eine Zutat, vorzugsweise Kaffeemehl, enthaltende Aufbrüheinheit austritt, aus der das so hergestellte Brühgetränk schließlich in einen Auffangbehälter abfließt. Auch bei dieser Kaffeemaschine ist eine Ventileinrichtung vorgesehen, die entweder von Hand oder durch elektronische Bauteile steuerbar ist, so daß nach einer vorgebbaren Brühzeit, bei der Brühwasser nur über die obere Fläche des Kaffeemehls in den Auffangbehälter gelangen kann, das Brühwasser auch auf anderem Wege, nämlich über einen sogenannten Bypass-Kanal, in den Auffangbehälter abfließt.

Sinn der Umleitung des Brühwassers nach Ablauf einer bestimmten Brühzeit ist es, den Geschmack des Brühgetränks positiv zu beeinflußen. So ist es vor allem aus der Zubereitung von Kaffee bekannt, daß eine zu lange Kontaktzeit zwischen Brühwasser und Kaffeemehl aus dem Kaffeemehl unerwünschte ätherische Öle, Bitterstoffe, etc. ausschwemmt. Die genannten Stoffe greifen neben ihrer Geschmacksbeeinträchtigung auch den Magen an und sind auch dafür verantwortlich, daß der Kaffee beim Abkühlen in der Tasse oder beim zu lange Warmhalten auf einer Warmhalteplatte im Geschmack regerecht umkippt, d.h. es entsteht eine chemische Reaktion, die sogar durch das Trübewerden des Kaffees angezeigt wird. Aufgrund des Zusammenhangs zwischen Kontaktzeit und der Ausschwemmung unerwünschter Substanzen aus dem Kaffeemehl verschärft sich die geschilderte Problematik umso mehr, je mehr Tassen des Brühgetränks dadurch aufgebrüht, daß sein Brühwasser über die obere Fläche der Zutat geleitet wird. Beide vorbekannten Brühgetränkemaschinen wirken der beschriebenen Auslösung von Substanzen dadurch entgegen, nach Ablauf einer bestimmten Brühzeit, die gleichbedeutend ist mit der Kontaktzeit von Brühwasser und Zutat, weiteres Brühwasser auf anderem Wege in den Auffangbehälter gelangen zu lassen. Auf diese Weise kommt es zu einer wesentlich geringeren Auslösung von unerwünschten Substanzen aus der Zutat. Selbstverständlich ist die Menge der Zutat auf die genannte Brühwassermenge unter Berücksichtigung des persönlichen Geschmacks des Benutzers der Brühgetränkemaschine abzustimmen.

Beide vorgenannten Brühgetränkemaschinen haben den Nachteil, daß sie aufwendige Ventileinrichtungen enthalten, sei es, daß diese von Hand oder elektronisch betätigt werden, die verhältnismäßig teuer und aufwendig sind. Darüber hinaus enthalten beide Brühgetränkemaschinen bewegliche Teile, die verschmutzungsbedingt festsitzen oder auch aus anderen Gründen ausfallen können.

Aus der US 4,056,050 ist eine gattungsgemäße Brühgetränkemaschine bekannt, die eine auf ihre Aufbrüheinheit aufsetzbare und nach oben offene Verteilereinrichtung aufweist, aus der sowohl Brühwasser über die Oberfläche der Zutat als auch auf anderem Wege in den Auffangbehälter gelangt. Die Verteilereinrichtung besteht im wesentlichen aus einer Haupt- und Nebenkammer, wobei sämtliches vom Durchlauferhitzer über die Steigleitung geförderte Brühwasser über die Hauptkammer eintritt, dort nach Überwindung einer im Durchfluß steuerbaren Ventileinrichtung auf die Zutat abfließt. Ebenso kann das Brühwasser aus der Hauptkammer nach Überwindung einer Wand auch in die Nebenkammer einfließen. Von der Hauptkammer abfließendes Brühwasser trifft auf die Zutat, während aus der Nebenkammer abfließendes Brühwasser ohne Kontaktierung der Zutat direkt in den Auffangbehälter abfließt. Durch die offene Bauweise der Verteilereinrichtung und aufgrund der durch die Bauweise der Ventileinrichtung bedingten Verlangsamung der Strömung des Brühwassers wird letzteres vor seinem Kontakt mit der Zutat bereits merklich abgekühlt. Diese Abkühlung führt zum einen zu einer geringeren Ausnutzung des Kaffeemehls und zum anderen zu einer Verminderung der Qualität des Brühgetränks in Bezug auf Geschmack und Aroma.

Aufgabe der Erfindung ist es daher, eine Brühgetränkemaschine zu schaffen, bei der einerseits die Haupt- und Nebenkammer während des Betriebs stets druckfrei bleiben und andererseits das Kaffeemehl zusätzlich während der Brühphase erwärmt wird.

Diese Aufgabe wird bei einer mit einem Durchlauferhitzer versehenen Brühgetränkemasachine nach dem Oberbegriff des Anspruchs 1 erfindungsgemäß dadurch gelöst, daß die Verbindung des Brühkopfes mit der Atmosphäre über ein durch den Boden des Brühkopfes hindurchtretendes Rohr gebildet wird, dessen freies Ende oberhalb der Oberkante der Trennwand liegt und daß das Rohr in der Hauptkammer in Nähe der ersten Austrittsöffnung angebracht ist.

Die bei den gattungsgemäßen Durchlauferhitzern beim Fördern von heißem Wasser eintretende Dampferzeugung führt bei der Erfindung nicht dazu, daß in der Haupt- und Nebenkammer ein Überdruck entsteht, der zur Folge hätte, daß eine erhöhte Wassermenge aus den Austrittsöffnungen gefördert werden würde. Der im allgemeinen unter Schnorchelgeräuschen erzeugte Dampf kann somit zur Atmosphäre hin entweichen, so daß sowohl die Haupt- als auch die Nebenkammer während des Betriebs der Kaffeemaschine stets druckfrei bleiben.

Weiterhin wird durch das oberhalb der Oberkante der Trennwand liegende Rohr erreicht, daß kein Brühwasser über das Rohr, sondern ausschließlich über die beiden Austrittsöffnungen aus dem Brühkopf abfließen kann.

Damit heißer Dampf nicht nutzlos über das Rohr entweicht, ist es nach der Erfindung als letztes Merkmal vorgesehen, daß das Rohr in der Hauptkammer in Nähe der ersten Austrittsöffnung angebracht ist. Tritt heißer Dampf am Rohr aus, so wird das Kaffeemehl, das sich unterhalb der ersten Austrittsöffnung befindet, vom Dampf aufgewärmt, so daß es vorgeheizt wird und damit auch das Brühgetränk allgemein heißer ist. Vorteilhafterweise liegt der Querschnitt des Rohres zwischen 15 mm² bis 30 mm². Ist der Querschnitt kleiner, wird die Zutat aufgrund zu hoher Dampfströmung überhitzt; ist der Querschnitt größer, ist die Durchdringung von heißem Dampf in die Zutat zu gering. Bei herkömmlichen Durchlauferhitzern im Bereich von 900 bis 1250 Watt hat sich ein Rohrdurchmesser von ca. 5 mm als vorteilhaft herausgestellt. Dabei wird die Zutat geschont, Bitteranteile werden kaum freigesetzt. Bei dieser Dimensionierung und bei Zubereitung von 8 Tassen Kaffee mit einer Kaffeemenge von ca. 50 g stellt sich eine Endtemperatur in der Zutat zwischen 87°C und 93°C ein, die sich durch den Aufguß des heißen Wassers zuzüglich der gesonderten Dampfbeaufschlagung ergibt.

Ein guter Kompromiß zwischen einer ausreichenden Ausnutzung des Kaffeemehls und dem Anteil an Bitterstoffen wird erreicht, wenn die Fläche der zweiten Austrittsöffnung kleiner ist als die Fläche der ersten Austrittsöffnung (Anspruch 2).

Hinsichtlich Geschmack und Konzentration des Brühgetränks über den Mengenbereich von 1 bis 12 Tassen hat es sich besonders bewährt, wenn die Dimensionierungen der ersten und zweiten Austrittsöffnung so gewählt sind, daß nach dem ersten Übertreten von Brühwasser aus der Hauptkammer in die Nebenkammer nur etwa 10 % bis 40 % des danach vom Durchlauferhitzer geförderten Brühwassers durch die zweite Austrittsöffnung abfließt (Anspruch 3).

Dadurch, daß die zweite Austrittsöffnung auf den inneren Rand der Aufbrüheinheit gerichtet ist und daß an dem inneren Rand ein Kanal ausgebildet ist, der für das Brühwasser den anderen Weg bildet (Anspruch 4), kann auf eine zusätzliche Bauteile benötigende, gesonderte Führung des Brühwassers zum Auffangbehälter hin verzichtet werden. Dadurch läßt sich neben ästhetischen Vorteilen auch eine Kosteneinsparung erreichen.

Dadurch, daß für den Fall, daß ein wasserdurchlässiger Filtereinsatz in die Aufbrüheinheit eingesetzt ist, der Kanal durch die Außenseite des Filtereinsatzes und durch den inneren Rand der Aufbrüheinheit gebildet wird, wobei die Weite des Kanals durch Abstandselemente bestimmt wird und so bemessen ist, daß eine seitliche Benetzung der Zutat durch das Brühwasser auftritt (Anspruch 5), wird erreicht, daß das auf anderem Wege in den Auffangbehälter gelangende Brühwasser mit den seitlichen Randbereichen der Zutat in Kontakt gelangt. Insbesondere bei Kaffee ergibt dies den Vorteil, daß auch dieser Randbereich von Brühwasser besser extrahiert wird, da das über die erste Austrittsöffnung austretende Brühwasser kaum in den Randbereich des Kaffeemehls vordringt. Dabei werden kaum unerwünschte Anteile aus dem Kaffeemehl ausgelöst, da zum einen der Randbereich vorher kaum mit Brühwasser in Kontakt gekommen ist und zum anderen durch den erfindungsgemäßen Brühkopf ohnehin die Kontaktzeit zwischen Brühwasser und Kaffeemehl verkürzt wird. In praktischen Versuchen hat sich gezeigt, daß das sogenannte Konzentrat im Brühgetränk (verantwortlich für die Stärke des Kaffees) sich bei dieser Weiterbildung des erfindungsgemäßen Brühkopfes um 10-15 % steigern läßt. Dieser Effekt wird noch dadurch verstärkt, daß bei aus Papier bestehenden Filtereinsätzen auch das sich dort bei alleiniger Brühwasserzufuhr aus der ersten Austrittsöffnung ansammelnde Konzentrat ausgeschwemmt wird und daher nicht unverwertet bleibt.

Alle die vorgenannten Merkmale treten in besonderem Maße auf, wenn die Kontaktfläche zwischen dem aus der zweiten Austrittsöffnung austretenden Brühwasser und den Randbereichen des Kaffeemehls dadurch erheblich vergrößert werden, daß sich der Kanal über weite Bereiche oder vollständig entlang des Umfangs der Aufbrüheinheit erstreckt (Anspruch 6).

Um bei der Einleitung des Brühwassers aus der zweiten Austrittsöffnung in den Kanal einen gewissen Trichtereffekt zu erzielen, weist der Kanal eingangsseitig eine Auffangrinne auf, die der zweiten Austrittsöffnung gegenüberliegt (Anspruch 7). Dabei kann die Auffangrinne zur Aufnahme von stoßartig aus der zweiten Auslaßöffnung austretendem Brühwasser sich auch ganz oder teilweise längs des Umfangs der Filtereinheit erstrecken. Dadurch, daß der Kanal ausgangsseitig in die Auslaßöffnung der Aufbrüheinheit mündet, ergibt sich ein einziger Auslaß an der Aufbrüheinheit, was die Konstruktion des Auffangbehälters vereinfacht, da nur ein einziger Einlaß vorzusehen ist, wodurch sich darüber hinaus Wärmeverluste des Brühgetränks in Grenzen halten.

Um mit einer Kaffeemaschine auch in der Praxis guten Kaffee herstellen zu können, ist es vorteilhaft, daß der Durchlauferhitzer eine Fördermenge von 3,5 bis 6 Milliliter pro Sekunde liefert, daß die Gesamtfläche von Haupt- und Nebenkammer zwischen 20 cm² und 40 cm² liegt, daß das Verhältnis der Flächen von Hauptkammer zu Nebenkammer im Bereich von 4 : 1 bis 8 : 1 liegt, daß die Höhe der Trennwand im Bereich von 6 mm bis 12 mm liegt, daß die Fläche der ersten Austrittsöffnung zwischen 7 mm² und 14 mm² und daß die Fläche der zweiten Austrittsöffnung zwischen 4 mm² und 13 mm² betragen (Anspruch 8). Optimale Kaffeergebnisse werden erzielt, wenn der Durchlauferhitzer eine Fördermenge von 4,5 Milliliter pro Sekunde bei einer elektrischen Leistung von 1250 Watt liefert, wenn die Gesamtfläche von Haupt- und Nebenkammer bei ca. 30 cm² liegt, wenn die Fläche der Hauptkammer ca. 25 cm² und die Fläche der Nebenkammer ca. 4,5 cm² beträgt, wenn die Höhe der Trennwand 8 mm, die Fläche der ersten Austrittsöffnung ca. 11 mm² und die Fläche der zweiten Austrittsöffnung ca. 8 mm² betragen (Anspruch 9). Damit das in die Nebenkammer einströmende Wasser nicht allzu schnell aus der zweiten Austrittsöffnung ausströmen kann, sind sowohl die Fläche der zweiten Austrittsöffnung als auch das Volumen der Nebenkammer kleiner als die Fläche der ersten Austrittsöffnung und das Volumen der zugehörigen Hauptkammer. Hierdurch kann die sich in der Nebenkammer anstauende Menge Wasser, d.h. die durch den Kanal fließende Brühwassermenge - die sogenannte Bypass-Menge -, bestimmt werden. Trotz geringer Bypassanteile werden relativ hohe Konzentratwerte erreicht; die Konzentratverluste sind unwesentlich (ca. 2,5 %), die Bitteranteile sind äußerst schwach. Durch Veränderung der Volumenanteile von Haupt- und Nebenkammer sowie deren Austrittsöffnungen können die Bypassanteile variiert werden.

Eine weitere, vorteilhafte Ausführungsform der Erfindung besteht darin, daß in der Hauptkammer mindestens eine Prallwand angebracht ist, die jeweils mindestens einen Durchlaß aufweist, der etwa in Höhe des Bodens des Brühkopfes liegt (Anspruch 10). Dadurch wird erreicht, daß stoßweise vom Durchlauferhitzer in den Brühkopf gefördertes Brühwasser erst dann von der Hauptkammer in die Nebenkammer übertritt, wenn der mittlere Brühwasserstand in der Hauptkammer die Oberkante der Trennwand übersteigt.

Eine Weiterbildung der Erfindung besteht darin, daß in dem Brühkopf ein Ventil ausgebildet ist, mit dem die Abflußmenge des Brühwassers über den anderen Weg reguliert werden kann (Anspruch 11). Dem Benutzer der Brühgetränkemaschine bleibt es also freigestellt, ein Brühgetränk mit mehr Bitterstoffen oder mit weniger oder nahezu gar keinen Bitterstoffen herzustellen. Der Geschmack des Brühgetränks kann also vom Benutzer vorbestimmt werden. Dabei kann allerdings das Ventil nur soweit geschlossen werden, daß noch ein Brühwasseranteil, der auf dem anderen Weg an der zweiten Austrittsöffnung abfließt, minimal 30 % beträgt, das heißt, das Ventil ist nicht vollständig verschließbar.

Vorteilhaft ist es, daß das Ventil an der zweiten Austrittsöffnung ausgebildet ist, so daß deren Querschnitt verändert werden kann (Anspruch 12). Die Anordnung des Ventils an der zweiten Austrittsöffnung ermöglicht eine besonders einfache Ausführungsform des Ventils und eine leichte Montage.

Um ein über eine lange Lebenszeit gut funktionierendes Ventil zu erhalten, wird in einer Weiterbildung der Erfindung vorgeschlagen, daß das Ventil aus einem im Gehäuse des Brühkopfes ausgebildeten Ventilsitz besteht, der mit einem mit dem Ventilsitz dichtend verschließbaren Ventilkolben zusammenwirkt und daß sowohl am Ventilkolben wie am Ventilsitz ein Durchbruch ausgebildet ist, durch den je nach dem Grad ihrer Überschneidung der Öffnungsquerschnitt des Ventils bestimmt wird (Anspruch 13). Ein solches Schlitzventil arbeitet besonders störunanfällig und läßt sich bereits unter einem geringen Drehwinkel von einer Minimal- (30 %-iger Öffnungsquerschnitt) bis zu seiner Maximalstellung (100 %-iger Öffnungsquerschnitt) steuern.

Damit das Ventil sich auch noch nach längerer Betriebszeit leicht drehen läßt und dennoch unter den gegebenen hohen Temperaturschwankungen nicht undicht wird, wird gemäß einer Weiterbildung der Erfindung vorgeschlagen, daß der Ventilsitz von einer Paßbohrung gebildet wird, in der ein zylindrischer Abschnitt des Ventilkolbens dichtend geführt wird, daß sowohl an der Paßbohrung wie am zylindrischen Abschnitt je ein Durchbruch ausgebildet ist und daß bei Drehung des Ventilkolbens um seine Längsachse der Durchbruch des Ventilkolbens mit dem Durchbruch des Ventilsitzes fluchtet (Anspruch 14). Das Ventil wird also von einem Schieberventil mit im Dichtsitz drehendem Ventilkolben gebildet. Derartige Ventile mit Gleitpassung lassen sich insbesondere ohne aufwendige Dichtungen und zusätzliche Dichtelemente herstellen. Dabei haben sich insbesondere Ventile aus nicht zu weichem Kunststoff oder Keramik als vorteilhaft erwiesen.

Soll einerseits das Betätigungselement an einer an der Brühgetränkemaschine gut zuganglichen Stelle und andererseits das Ventil selbst an einer anderen gut integrierbaren Stelle der Brühgetränkemaschine angeordnet sein, so wird nach einer Weiterbildung der Erfindung vorgeschlagen, daß das Betätigungselement um eine parallel zur Längsachse verschobene Drehachse drehbar ist und daß die Übertragung der Drehbewegung des Betätigungselementes auf den Ventilkolben durch einen am letzteren exzentrisch angreifenden Schieber erfolgt (Anspruch 16). Durch diese Anordnung kann also das Betätigungselement örtlich getrennt von dem Ventil in der Brühgetränkemaschine angeordnet sein und es kann dennoch mechanisch betätigt werden.

Ein besonders einfaches Hebelgetriebe wird dadurch erreicht, daß der Schieber eine erste und zweite Öffnung aufweist, in dessen erste Öffnung ein außerhalb der Längsachse am Ventilkolben ausgebildeter erster Zapfen eingreift und in dessen zweite Öffnung ein außerhalb der Drehachse am Betätigungselement ausgebildeter zweiter Zapfen eingreift (Anspruch 17). Durch die nach Montage in die Öffnungen eingreifenden Zapfen wird eine einfache und schnelle Verbindung des Schiebers sowohl mit dem Betätigungselement wie mit dem Ventilkolben erreicht. Durch die außermittige Anordnung der Zapfen sowohl am Betätigungselement wie am Ventilkolben wird die am Betätigungselement eingeleitete Drehbewegung in eine geradlinige Bewegung am Schieber umgesetzt, die dann anschließend wieder am Ventilkolben zum Steuern des Ventils in eine Drehbewegung umgewandelt wird. Ein derartiges Hebelgetriebe ist einfach herstellbar und erlaubt überhaupt erst die örtliche Trennung des Betätigungselements gegenüber dem Ventilkolben in der Brühgetränkemaschine.

Da das Ventil den Abfluß des Brühwassers aus der Nebenkammer über die zweite Austrittsöffnung steuert, ist es angebracht, den Schieber in der Nebenkammer zu führen. Hierdurch können die Führungseinrichtungen für den Schieber direkt an die ohnehin vorhandenen Nebenkammer mit angeformt werden. Beispielsweise kann der Schieber am Deckel des Brühkopfes geführt werden (Anspruch 18). Dabei ist der Schieber so in der Nebenkammer anzuordnen, daß dieser im wesentlichen nicht mit dem ausfließenden Brühwasser in Kontakt kommt, damit zusätzliche Abdichtungen zwischen der Leitung bzw. zwischen der Nebenkammer und dem Schieber vermieden werden können. Besonders einfache Teile ergeben sich, wenn der Brühkopf aus Kunststoff geformt ist.

Eine besonders übersichtliche und gut bedienbare Ventilanordnung wird erreicht, wenn das Betätigungselement am Rand des Vorratsbehälters der Brühgetränkemaschine geführt wird und wenn gleichzeitig der Vorratsbehälter im wesentlichen bis zum oberen Rand der Brühgetränkemaschine verläuft (Anspruch 19). Vorteilhaft ist es dabei, wenn der Vorratsbehälter von einem Deckel verschließbar ist, der das Betätigungselement nach außen abdeckt (Anspruch 20). Es ist aber auch in einer anderen Ausführungsform denkbar, daß der Vorratsbehälter von einem Deckel verschließbar ist und daß der Deckel eine Öffnung aufweist, durch die das Betätigungselement von außen betätigbar ist (Anspruch 21). Letztere Ausführung ermöglicht einer Bedienungsperson gute Übersichtlichkeit und den schnellen Zugang zum Betätigungselement, ohne daß dabei der Deckel des Vorratsbehälters geöffnet werden muß.

Ein Ausführungsbeispiel der Erfindung ist in der Zeichnung dargestellt und wird im folgenden näher beschrieben. Es zeigen:
- Fig. 1: Längsschnitt durch ein Ausführungsbeispiel der Erfindung, wobei nur der den anderen Weg enthaltende Brühkopf und die Aufbrüheinheit einer Brühgetränkemaschine schematisch dargestellt sind und
- Fig. 2: zeigt in einer sogenannten Explosionszeichnung eine im Brühkopf nach Fig. 1 eingesetzte Ventilanordnung.

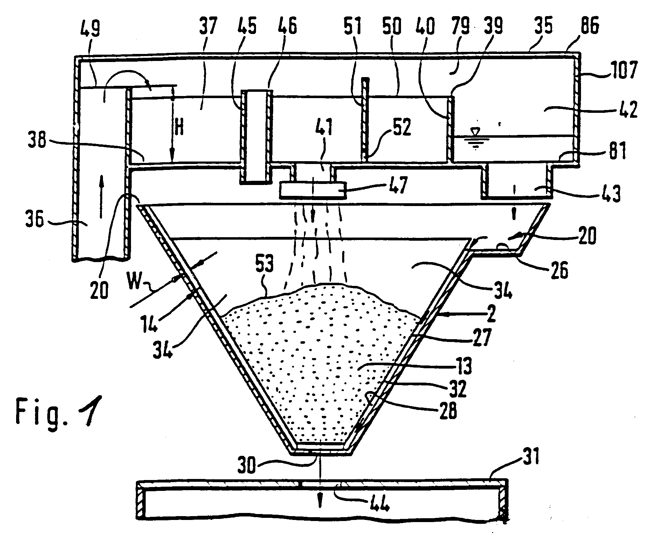

In Fig. 1 ist lediglich ein Brühkopf 35 dargestellt, der oberhalb der Aufbrüheinheit 2 ausgebildet ist. Der Brühkopf 35 weist ein Steigrohr 36 auf, das mit einem in der Zeichnung nicht dargestellten Durchlauferhitzer verbunden ist. Der Durchlauferhitzer ist wiederum über einen in der Zeichnung nicht dargestellten Vorratsbehälter verbunden, in dem sich beim Aufbrühvorgang kaltes Wasser befindet. Da eine nach diesem Prinzip arbeitende Kaffeemaschine bereits seit langem bekannt ist, wie dies auch aus der deutschen Patentanmeldung DE-A-4 108 631 deutlich hervorgeht, wird auf die Erzeugung und den Transport von Brühwasser bis zum Brühkopf 35 hin hier nicht näher eingegangen. Das Brühwasser wird also dann letztendlich dem Steigrohr 36 am Brühkopf 35 zugeführt.

Nach Fig. 1 mündet das Steigrohr 36 in eine im Brühkopf 35 ausgebildete Hauptkammer 37, allerdings in einer Höhe H gegenüber dem Boden 38 der Hauptkammer 37, die oberhalb der Oberkante 39 einer Trennwand 40 liegt. Die Trennwand 40 grenzt die Hauptkammer 37 nach Fig. 1 nach rechts ab und liegt rechts von einer ersten Austrittsöffnung 41, die etwa oberhalb der Mitte der Aufbrüheinheit 2 ausgebildet ist, so daß, wenn Brühwasser aus der ersten Austrittsöffnung 41 auströmt, dieses direkt auf die obere Fläche 53 der sich darunter befindlichen Zutat 13 fließt.

Rechts von der Trennwand 40 ist nach Fig. 1 eine Nebenkammer 42 ausgebildet, die am Boden 38 des Brühkopfes 35 eine zweite Austrittsöffnung 43 aufweist. Das aus der zweiten Austrittsöffnung 43 ausströmende Brühwasser strömt auf die in der Aufbrüheinheit 2 ausgebildete Auffangrinne 26, von wo es über den Kanal 27, der von dem Papierfilter 14, von den Rippen 32 und der Wandung 28 gebildet wird, schließlich in die am unteren Ende der Aufbrüheinheit 2 ausgebildete Auslaßöffnung 30 gelangt, von wo es dann in den darunterstehenden Auffangbehälter 31 über den Einlaß 44 einfließt.

Nach Fig. 1 ist links von der ersten Austrittsöffnung 41 im Boden 38 ein Rohr 45 ausgebildet, das den Boden 38 nach unten zur Atmosphäre hin durchdringt und das in die Hauptkammer 37 soweit hineinragt, daß es mit seiner Oberkante 46 oberhalb der Trennwand 40 endet. Das Rohr 45 dient als Entlüftung für die Haupt- und Nebenkammer 37, 42. An die erste Austrittsöffnung 41 schließt sich noch ein Ventil 47 an, mit dem der Durchlaßquerschnitt der ersten Austrittsöffnung 41 vergrößert werden kann.

Die Wirkungsweise der Brühgetränkemaschine nach Fig. 1 ist folgende:
Wird in Fig. 1 der Hauptschalter der Brühgetränkemaschine 1 eingeschaltet, so wird in dem in Fig. 1 nicht dargestellten Durchlauferhitzer Wasser erhitzt und durch die dabei eintretende Dampfblasenwirkung an dem Steigrohr 36 nach oben gepumpt, bis Brühwasser über den Rand des Steigrohres 36 in die Hauptkammer 37 einströmt. Wie allgemein bekannt, fördert ein Durchlauferhitzer entsprechend seiner Heizleistung und dem Querschnitt seines beheizten Rohres in mehr oder weniger schnellen Intervallen Brühwasser, so daß jeweils an der Oberkante 49 Brühwasser schlagartig übertritt. Ist kein Ventil 47 vorhanden, so strömt entsprechend dem an der ersten Austrittsöffnung 41 ausgebildeten Querschnitt eine entsprechende Brühwassermenge aus der ersten Austrittsöffnung 41 auf die obere Fläche 53 der darunter befindlichen Zutat 13.

Da aber der Querschnitt der ersten Austrittsöffnung 41 so bemessen ist, daß weniger Brühwasser abfließt, als über das Steigrohr 36 zufließt, füllt sich die Hauptkammer 37 langsam mit Brühwasser, bis ein Brühwasserstand 50 erreicht wird, der der Oberkante 39 der Trennwand 40 entspricht. Danach läuft Brühwasser auch über die Oberkante 39 der Trennwand 40 in die Nebenkammer 42 ein, von wo es über die zweite Austrittsöffnung 43 in die Auffangrinne 26 der Aufbrüheinheit 2 gelangt und von dort dann über den Kanal 27 zur Auslaßöffnung 30 fließt, wo es mit dem Brühgetränk gemischt und in den darunter aufgestellten Auffangbehälter 31 abfließt.

Die Brühwassermenge, die mit der oberen Fläche 53 der Zutat 13 in Berührung kommt, extrahiert beispielsweise aus Kaffee die Extraktionsstoffe und fließt dann an der Auslaßöffnung 30 über den Einlaß 44 in den Auffangbehälter 31. Gleichzeitig fließt aber auch Brühwasser über den als Bypass ausgebildeten Kanal 27 zur Auslaßöffnung 30. Dieser Brühwasseranteil, der bei einem wasserdurchlässigen Filtereinsatz 14 von der Seitenfläche des Kaffeemehls 13 her mit diesem in Kontakt kommt, führt zu einer wirksamen Extraktion dieses Kaffeemehlbereiches, die bei einer alleinigen Brühwasserzuführung über die obere Fläche 53 nicht in diesem Maße eintreten kann. Hierdurch kann man bei der Zubereitung von Kaffee einer gewünschten Stärke mit weniger Kaffeemehl 13 auskommen. Dabei kommt es praktisch kaum zu einer Extraktion von unerwünschten Geschmacksstoffen, da die Kontaktzeiten zwischen Kaffeemehl 13 und Brühwasser durch den als Bypass wirkenden Kanal 27 verringert wird.

Durch den getrennten Abfluß des Brühwassers aus dem Vorratsbehälter 3 wird nämlich ein geringer Anteil von Brühwasser über die obere Fläche 53 der Zutat 13 geleitet, als wenn die Austrittsöffnung 43 nicht vorhanden wäre. Hierdurch wird die Zutat 13 während einer kürzeren Zeit mit Brühwasser beaufschlagt, so daß Bitterstoffe und sonstige das Brühgetränk nachteilig beeinträchtigende Zutaten nicht extrahiert werden. Das den Kanal 27 durchströmende Brühwasser läuft unter Extraktion der Zutat 13 im oberen Randbereich des Papierfilters ebenfalls an der Auslaßöffnung 30 aus der Aufbrüheinheit 2 aus und vermischt sich dabei mit dem extrahierenden Brühgetränk.

Ist der Filtereinsatz 14 in den Seitenbereichen des Kaffeemehls 13 nicht wasserduchlässig, so wird mit dem durch den Kanal 27 fließenden Brühwasseranteil zwar keine Extraktionswirkung erzielt, es bleibt aber nach wie vor bei der vorteilhaften Verkürzung der Kontaktzeit zwischen dem Brühwasser und dem Kaffeemehl durch die Bypasswirkung des Kanals 27.

Aufgrund der starken Dampfbildung während der Förderung des Brühwassers durch das Steigrohr 36 könnte in dem geschlossenen Brühkopf 35, also in der Haupt- und Nebenkammer 37, 42, ein Überdruck entstehen, wenn nicht das Rohr 45 in der Hauptkammer 37 ausgebildet wäre, das erst oberhalb des Wasserstandes 50 endet, den Boden 38 durchdringt und dort mit der Atmosphäre verbunden ist. Hierdurch kann eine Druckerhöhung in der Haupt- und Nebenkammer 37, 42 nicht mehr auftreten, da Druckstöße über das Rohr 45 sofort zur Atmosphäre hin abgeleitet werden, wodurch ein gleichmäßiges Ausfließen von Brühwasser aus den Austrittsöffnung 41, 43 in Abhängigkeit des Wasserstandes erreicht wird. Der Austritt von heißem Dampf am Rohr 35 wird vorteilhaft noch dazu genutzt, die Zutat 13 und die Aufbrüheinheit 2 in gewissen Grenzen zu erwärmen, so daß Wärmeverluste beim Durchlauf des Brühwassers durch die Zutat 13 teilweise ausgeglichen werden und somit ausreichend heißer Kaffee in den Auffangbehälter 31 gelangt.

Wie aus Fig. 1 noch ersichtlich ist, erhebt sich vom Boden 38 eine Prallwand 51, die mit mindestens einem Durchlaß 52 versehen ist. Die Durchlässe 52 dienen dazu, das sich jeweils links und rechts der Prallwand 51 in der Hauptkammer 37 ein gleichmäßig hoher Wasserstand 50 einstellt. Die Prallwand 51 selbst hat die Aufgabe, Brühwasser, das an der Oberkante 49 des Steigrohres 36 eingespritzt wird, abzufangen und zunächst in die Hauptkammer 37 einzuleiten, damit stets gewährleistet ist, daß Brühwasser nur dann in die Nebenkammer 42 einströmt, wenn der Brühwasserstand 50 tatsächlich auf der Höhe der Oberkante 39 der Trennwand 40 liegt.

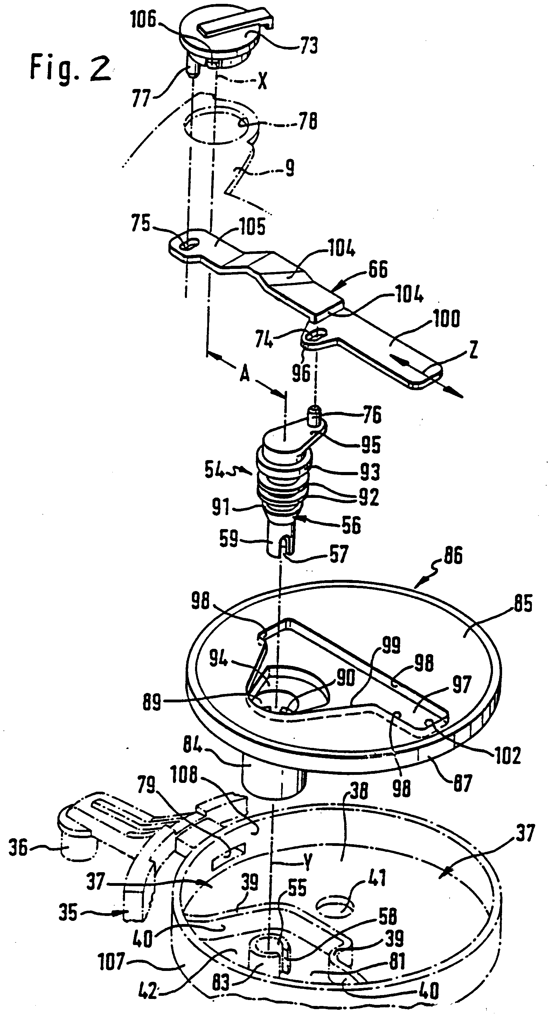

In Fig. 2 ist im unteren Bereich der gemäß Fig. 1 beschriebene Brühkopf 35 teilweise strichpunktiert dargestellt, in den über die Leitung 36 das heiße Brühwasser von dem in der Zeichnung nicht dargestellten Durchlauferhitzer über die Einlaßöffnung 79 in die Hauptkammer 37 einfließt. Die Hauptkammer 37 ist von einer umlaufenden Wand 107 umgeben. Vom Boden 38 der Hauptkammer 37 erstreckt sich nach oben eine Trennwand 40, die mit dem Boden 81 die Nebenkammer 42 bildet und die von der Hauptkammer 37 bis zur Oberkante 39 abgegrenzt ist. Die Hauptkammer 37 weist die im Querschnitt rechteckige Einlauföffnung 79 auf, die gegenüber dem Boden 38 der Hauptkammer 37 höhenversetzt ist. Die Hauptkammer 37 weist an ihrem Boden 38 eine Öffnung 41 auf, die das Brühwasser gemäß Fig. 1 direkt auf die obere Fläche 53 der Zutat 13 leitet. Die Einlauföffnung 79 ist in der umlaufenden Trennwand 107 des Brühkopfes 35 angeordnet.

Wie aus Fig. 2 weiterhin zu erkennen ist, weist die Nebenkammer 42 an ihrem Boden 81 einen rohrförmig ausgebildeten Ventilsitz 55 auf, der konzentrisch zur senkrecht verlaufenden Längsachse Y verläuft und der an seiner Wandung 83 einen Durchbruch 58 aufweist. An den Ventilsitz 55 schließt sich nach unten die in Fig. 1 dargestellte Auslaßöffnung 43 an. Die äußere Wandung des rohrförmig ausgebildeten Ventilsitzes 55 ist mit einer zylindrisch verlaufenden Mantelfläche 83 versehen, auf die ein rohrförmiger Stutzen 84 übergreift. Der rohrförmige Stutzen 84 befindet sich an der Unterseite eines schalenförmig ausgebildeten Deckels 86. Dieser Deckel 86 greift mit einem Bund 87 in den inneren Rand 108 der Wand 107 und liegt dort dichtend an. Dadurch wird ein montagegünstiger Verschluß von Hauptkammer 37 und Nebenkammer 42 erreicht. Der Boden 85 des Deckels 86 liegt soweit über der Einlauföffnung 79 und über der Trennwand 40, daß das Brühwasser ungehindert in die Hauptkammer 37 und über die Oberkante 39 der Trennwand 40 in die Nebenkammer 42 fließen kann. Der Deckel 86 berenzt die Haupt- und Nebenkammer 37, 42 nach oben dichtend.

Der Stutzen 84 ist nach Fig. 2 mit einer Bohrung 89 versehen, in die der Ventilkolben 56 eingesetzt wird und letzterer mit seinem zylindrisch verlaufenden Abschnitt 59 in den zylindrisch ausgebildeten Ventilsitz 55 greift, wenn der Ventilkolben 56 in der Bohrung 89 eingesetzt ist. An dem Abschnitt 59 des Ventilkolbens 56 ist ein ensprechend dem Durchbruch 58 von oben nach unten, also parallel zu der Längsachse Y verlaufender Durchbruch 57 ausgebildet, der, wenn beide Durchbrüche 57, 58 teilweise oder ganz miteinander fluchten (nicht dargestellt), das in die Nebenkammer 42 eingeflossene Brühwasser zum Auslauf freigibt, so daß dieses über die zweite Austrittsöffnung 43, die sich an den Ventilsitz 55 anschließt, in die Aufbrüheinheit 2 abfließen kann (Fig. 1 und 2).

Nach Fig. 2 erheben sich von der Bohrung 89 konzentrisch zur Längsachse Y und auf gleicher Höhe verlaufende Noppen 90, die am Umfang der Bohrung 89 gleichmäßig verteilt sind. Diese Noppen 90 dienen als axiale Sicherung des Ventilkolbens 56 in der Bohrung 89 bzw. am Ventilsitz 55, nachdem der Ventilkolben 56 in die Bohrung 89 eingesetzt ist; denn dabei hintergreifen die Noppen 90 den am Ventilkolben 56 ausgebildeten Bund 91, so daß sich der Ventilkolben 56 auch bei mehrmaliger Drehung bei Betätigung des Ventils 54 nicht nach oben aus der Bohrung 89 herausdrehen kann. Oberhalb des Bundes 91 sind Ringe 92 ausgebildet, die gegenüber dem Innendurchmesser der Bohrung 89 so bemessen sind, daß zusätzlich an dieser Stelle eine Dichtstelle entsteht. Gleichzeitig sind die Außendurchmesser der äußeren Mantelflächen der Ringe 92 so bemessen, daß sie mit einer geringen Vorspannung an der Wandung der Bohrung 89 anliegen, so daß ein selbsttätiges Verdrehen des Ventilkolbens 56 infolge von auf die Brühgetränkemaschine 1 einwirkenden Schwingungen nicht erfolgen kann.

Am oberen Ende weist der Ventilkolben 56 nach Fig. 2 einen Ring 93 auf, der bei eingebautem Ventilkolben 56 in die Bohrung 89 als Anschlag an der die Bohrung 89 nach oben begrenzenden Stirnfläche 94 dient. An den Ringbund 93 schließt sich nach Fig. 2 nach oben ein am Ventilkolben 56 angeformter Hebel 95 an, an dessen oberer Stirnfläche ein nach oben gerichteter erster Zapfen 76 angeformt ist. Bei eingebautem Ventil 54 greift der erste Zapfen 76 in eine oberhalb des Ventilkolbens 56 an einem Schieber 66 ausgebildete erste Öffnung 74 ein, die an einem am Schieber 66 seitlich ausgebildeten Vorsprung 96 ausgebildet ist.

Bei im Brühkopf 35 eingebautem Ventil 54 (nicht dargestellt) liegt der Schieber 66 mit seinem Abschnitt 100 flach in einer im Boden 85 des Deckels 86 ausgebildeten Ausnehmung 97, deren einzelne Seitenwandbereiche 98 als seitliche Begrenzung für den Schieber 66 dienen, so daß dieser nur in seiner Verschieberichtung Z verschiebbar ist. Der Schieber 66 wird nach oben durch die untere Seite der oberen Abdeckung (nicht dargestellt) der Brühgetränkemaschine 1 in der Ausnehmung 97 gehalten. Der untere Seitenwandbereich 98 weist eine Erweiterung 99 auf, durch die beim Verschieben des Schiebers 66 in Verschieberichtung Z sowohl dem Hebel 95 wie dem Vorsprung 96 ein ausreichender Spielraum gewährleistet wird. An den vorderen Bereich 100 schließen sich Stufen 104 an, die dazu dienen, daß der Schieber 66 über den Bund 87 nach außen zum zweiten Zapfen 77 des Betätigungselements 73 geführt werden kann. Die Stufe 102 dient als Anschlag für den Schieber 66 in Richtung Z.

Im vorderen Abschnitt 105 des Schiebers 66 ist eine zweite Öffnung 75 ausgebildet, in die im eingebauten Zustand des Ventils 54 der zweite Zapfen 77 eingreift. Der zweite Zapfen 77 ist exzentrisch an dem im wesentlichen kreisförmig ausgebildeten Betätigungselement 73 angeordnet, das im eingebauten Zustand von einer im Deckel 9 eines Vorratsbehälters (nicht dargestellt) einer Brühgetränkemaschine 1 ausgebildeten Bohrung 78 umgeben wird. Das Betätigungselement 73 weist umfangsseitig Rastelemente 106 auf, die eine im Vorratsbehälter ausgebildete Bohrung (nicht dargestellt) hintergreifen und so das Betätigungselement 73 am Vorratsbehälter drehbar lagern. Wie aus Fig. 2 zu erkennen ist, weist die Drehachse X zur Längsachse Y einen Abstand A auf, der den Abstand des Ventilkolbens 56 zum Betätigungselement 73 wiedergibt. Durch den gleichen Abstand der beiden Zapfen 76, 77 zu den langlochförmigen Öffnungen 74, 75 ist es möglich, über den Schieber 66 das Ventil 54 zu betätigen. Somit kann die Lage des Betätigungselementes 73 nach funktionalen und gestalterischen Gesichtspunkten unabhängig von der vorbestimmten Lage der Öffnung 43 (Fig. 1) festgelegt werden.

Die Wirkungsweise des erfindungsgemäßen Ventils nach Fig. 2 in Verbindung mit der Brühgetränkemaschine nach Fig. 1 ist folgende:
Ist das Ventil 54 geschlossen (nicht dargestellt), so überschneiden sich die Schlitze 57, 58 nur geringfügig, das heißt, der Schlitz 57 wird im wesentlichen Bereich von dem Ventilsitz 55 derart dichtend verschlossen, daß nur ca. 30 % des maximalen Durchlaufquerschnittes geöffnet sind. In dieser Stellung kann zwar Brühwasser über die Oberkante 39 der Trennwand 40 in die Nebenkammer 42 einfließen, wenn die Hauptkammer bereits mit Brühwasser gefüllt ist, ein Abfließen des Brühwassers über das Ventil 54 zur zweiten Austrittsöffnung 43 erfolgt jedoch nur in geringer Menge. Auf diese Weise fließt also das meiste Brühwasser gemäß Fig. 1 über die erste Austrittsöffnung 41 auf die obere Fläche 53 der Zutat 13. Hierdurch ergibt sich ein Brühgetränk mit verhältnismäßig großen Bitteranteilen. Zur Vermeidung von Wiederholungen wird der andere Weg 27, den das Brühwasser über die zweite Austrittsöffnung zurücklegt, weiter unten beschrieben.

Wünscht eine Bedienungsperson ein weniger bitteres Brühgetränk, beispielsweise bei der Zubereitung von Kaffee, so kann sie durch Drehen des Betätigungselementes 73 das Ventil 54 weiter öffnen. Dabei verdreht sich der zweite Zapfen 77 und nimmt über die zweite Öffnung 75 den Schieber 66 in seiner Längsrichtung mit. Hierdurch wird über die erste Bohrung 74 auch der erste Zapfen 76 verschoben, so daß durch den Hebel 95 der Ventilkolben 56 in der Bohrung 89 und gleichzeitig in dem Ventilsitz 55 verdreht wird. Dabei wird die Überschneidung des Schlitzes 57 mit dem Schlitz 58 derart vergrößert, daß das in der Nebenkammer 42 befindliche Brühwasser in erhöhtem Maße aus der Nebenkammer 42 abfließen und nach Fig. 1 über die zweite Austrittsöffnung 43 in die Auffangrinne 26 der Filtereinheit 2 einfließen kann. Der gleiche Weg des Brühwassers über die zweite Austrittsöffnung 43 erfolgt natürlich auch bei minimaler Ventilstellung.

Nach Eintritt des Brühwassers in die Auffangrinne 26 wird es durch den zwischen dem Papierfilter 14, den Rippen 32 und der Innenwandung 28 der Filtereinheit 2 gebildeten Kanal, der also Teil des anderen Weges 27 ist, zu der Auslaßöffnung 30 geleitet. Dabei kann auch ein Teil des Bypasswassers über die Außenfläche des Papierfilters 14 in die Zutat 13 gelangen und diese zusätzlich noch von dem äußeren Bereich her extrahieren, so daß, ohne daß nennenswerte Bitterstoffanteile in das Brühgetränk gelangen, eine bessere Ausnutzung der Zutat 13 erfolgt.

Je größer die Überschneidung der Schlitze 57, 58 ist, desto mehr Brühwasser fließt aus der Nebenkammer 42 ab und desto weniger Brühwasser fließt direkt über die obere Fläche 53 der Zutat 13 (Fig. 1). Durch den engen Kontakt der Außenwand des zylindrisch verlaufenden Abschnittes 59 des Ventilkolbens 56 mit der Innenwand des Ventilsitzes 55 und die steife Ausführung des ausgesparten Abschnittes 59 ist das Ventil 54 relativ unempfindlich gegen Kalkablagerungen. Eine Bedienungsperson kann also durch Verstellen des Ventils 54 den Geschmack des Brühgetränks beeinflußen, nämlich ob mehr oder weniger Bitterstoffe im Brühgetränk vorhanden sein sollen.

## Patentansprüche

1. Brühgetränkemaschine, bei der der Brühvorgang dadurch erfolgt, daß aus einem Vorratsbehälter kaltes Wasser in einen elektrischen Durchlauferhitzer einfließt, dort erhitzt und das dabei entstehende Brühwasser über eine Steigleitung (36) einer eine erste (41) und zweite (43) Austrittsöffnung aufweisenden Verteilereinrichtung (37, 42) zugeführt wird, von der das Brühwasser einerseits über die erste Austrittsöffnung (41) auf die obere Fläche (53) einer Zutat (13), vorzugsweise Teeblätter oder Kaffeemehl, fließt, die in einer Aufbrüheinheit (2) enthalten ist, aus der nach Extrahierung der Zutat (13) das so hergestellte Brühgetränk schließlich in einen Auffangbehälter (31) abfließt und von der andererseits auch Brühwasser nach Überwindung einer Trennwand (40) zur zweiten Austrittsöffnung (43) fließen kann, wobei dieser Anteil des Brühwassers über einen anderen Weg (27) als über die obere Fläche (53) der Zutat (13) in den Auffangbehälter (31) gelangt, und bei der die Verteilereinrichtung als kammerförmiger abgeschlossener Brühkopf (35) ausgebildet ist, die Trennwand (40) den Brühkopf (35) in eine Haupt- (37) und Nebenkammer (42) unterteilt, das gesamte Brühwasser aus der Steigleitung (36) über die Hauptkammer (37) in den Brühkopf (35) einfließt und der Brühkopf (35) ständig mit der Atmosphäre verbunden ist,
**dadurch gekennzeichnet**,
daß die Verbindung des Brühkopfes (35) mit der Atmosphäre über ein durch den Boden (38) des Brühkopfes (35) hindurchtretendes Rohr (45) gebildet wird, dessen freies Ende (46) oberhalb der Oberkante (39) der Trennwand (40) liegt und daß das Rohr (45) in der Hauptkammer (37) in Nähe der ersten Austrittsöffnung (41) angebracht ist.

2. Brühgetränkemaschine nach Anspruch 1,
**dadurch gekennzeichnet**,
daß die Fläche der zweiten Austrittsöffnung (43) kleiner ist als die Fläche der ersten Austrittsöffnung (41).

3. Brühgetränkemaschine nach Anspruch 2,
**dadurch gekennzeichnet**,
daß die Dimensionierungen der ersten (41) und zweiten (43) Austrittsöffnung so gewählt sind, daß nach dem ersten Übertreten von Brühwasser aus der Hauptkammer (37) in die Nebenkammer (42) 10 % bis 40 % des danach vom Durchlauferhitzer geförderten Brühwassers durch die zweite Austrittsöffnung (43) abfließt.

4. Brühgetränkemaschine nach Anspruch 1,
**dadurch gekennzeichnet**,
daß die zweite Austrittsöffnung (43) auf den inneren Rand (20) der Aufbrüheinheit (2) gerichtet ist und daß an dem inneren Rand (20) ein Kanal (27) ausgebildet ist, der für das Brühwasser den anderen Weg bildet.

5. Brühgetränkemaschine nach Anspruch 4,
**dadurch gekennzeichnet**,
daß für den Fall, daß ein wasserdurchlässiger, die Zutat (13) enthaltender Filtereinsatz (14) in die Aufbrüheinheit (2) eingesetzt ist, der Kanal (27) durch die Außenseite des Filtereinsatzes (14) und durch den inneren Rand (20) der Aufbrüheinheit (2) gebildet wird, wobei die Weite (W) des Kanals (27) durch Abstandselemente (32) bestimmt wird und so bemessen ist, daß eine seitliche Benetzung der Zutat (13) durch das Brühwasser auftritt.

6. Brühgetränkemaschine nach Anspruch 5,
**dadurch gekennzeichnet**,
daß sich der Kanal (27) über weite Bereiche oder vollständig entlang des Umfangs am inneren Rand (20) der Aufbrüheinheit (2) erstreckt.

7. Brühgetränkemaschine nach Anspruch 4,
**dadurch gekennzeichnet**,
daß der Kanal (27) eingangsseitig eine Auffangrinne (26) aufweist, die unterhalb der Oberkante des Filtereinsatzes (14) verläuft und die der zweiten Austrittsöffnung (43) gegenüberliegt und ausgangsseitig in die Auslaßöffnung (30) der Aufbrüheinheit (2) mündet.

8. Brühgetränkemaschine nach Anspruch 2,
**dadurch gekennzeichnet**,
daß der Durchlauferhitzer eine Fördermenge von 3,5 bis 6 Milliliter pro Sekunde liefert, daß die Gesamtfläche von Haupt- (37) und Nebenkammer (47) zwischen 20 cm² und 40 cm² liegt, daß das Verhältnis der Flächen von Hauptkammer (37) zu Nebenkammer (42) im Bereich von 4 : 1 bis 8 : 1 liegt, daß die Höhe (39) der Trennwand (40) im Bereich von 6 mm bis 12 mm liegt, daß die Fläche der ersten Austrittsöffnung (41) zwischen 7 mm² und 14 mm² und daß die Fläche der zweiten Austrittsöffnung (43) zwischen 4 mm² und 13 mm² betragen.

9. Brühgetränkemaschine nach Anspruch 8,
**dadurch gekennzeichnet**,
daß der Durchlauferhitzer eine Fördermenge von ca. 4,5 Milliliter pro Sekunde bei einer elektrischen Leistung von ca. 1250 Watt liefert, daß die Gesamtfläche von Haupt- (37) und Nebenkammer (42) bei ca. 30 cm² liegt, daß die Fläche der Hauptkammer (37) ca. 25 cm² und die Fläche der Nebenkammer (42) ca. 4,5 cm² beträgt, daß die Höhe der Trennwand (40) ca. 8 mm, die Fläche der ersten Austrittsöffnung (41) ca. 11 mm² und die Fläche der zweiten Austrittsöffnung (43) ca. 8 mm² betragen.

10. Brühgetränkemaschine nach Anspruch 1,
**dadurch gekennzeichnet**,
daß in der Hauptkammer (37) mindestens eine Prallwand (51) angebracht ist, die jeweils mindestens einen Durchlaß (52) aufweist, der etwa in Höhe des Bodens (38) des Brühkopfes (35) liegt.

11. Brühgetränkemaschine nach Anspruch 1,
**dadurch gekennzeichnet**,
daß in dem Brühkopf (35) ein Ventil (54) ausgebildet ist, mit dem die Abflußmenge von Brühwasser über den anderen Weg (27) reguliert werden kann.

12. Brühgetränkemaschine nach Anspruch 11,
**dadurch gekennzeichnet**,
daß das Ventil (54) an der zweiten Austrittsöffnung (43) ausgebildet ist, mit dem die Durchtrittsfläche der zweiten Austrittsöffnung (43) verkleinert werden kann.

13. Brühgetränkemaschine nach Anspruch 12,
**dadurch gekennzeichnet**,
daß das Ventil (54) aus einem im Gehäuse des Brühkopfes (35) ausgebildeten Ventilsitz (55) besteht, der mit einem mit dem Ventilsitz (55) dichtend verschließbaren Ventilkolben (56) zusammenwirkt und daß sowohl am Ventilkolben (56) wie am Ventilsitz (55) ein Durchbruch (57, 58) ausgebildet ist, durch den je nach dem Grad ihrer Überschneidung die Durchtrittsfläche des Ventils (54) bestimmt wird.

14. Brühgetränkemaschine nach Anspruch 13,
**dadurch gekennzeichnet**,
daß der Ventilsitz (55) von einer Paßbohrung gebildet wird, in der ein zylindrisch ausgebildeter Abschnitt (59) des Ventilkolbens (56) dichtend geführt wird, daß sowohl an der Paßbohrung (55) wie am zylindrischen Abschnitt (59) je ein Durchbruch (57, 58) ausgebildet ist und daß bei Drehung des Ventilkolbens (56) um seine Längsachse (Y) der Durchbruch (57) des Ventilkolbens (56) mit dem Durchbruch (58) des Ventilsitzes (55) fluchtet.

15. Brühgetränkemaschine nach Anspruch 14,
**dadurch gekennzeichnet**,
daß zur Steuerung des Ventils (54) der Ventilkolben (56) durch ein Betätigungselement (73) um seine Längsachse (Y) drehbar ist.

16. Brühgetränkemaschine nach Anspruch 15,
**dadurch gekennzeichnet**,
daß das Betätigungselement (73) um eine parallel zur Längsachse (Y) verschobene Drehachse (X) drehbar ist und daß die Übertragung der Drehbewegung des Betätigungselementes (73) auf den Ventilkolben (56) durch einen am letzteren (56) exzentrisch angreifenden Schieber (66) erfolgt.

17. Brühgetränkemaschine nach Anspruch 16,
**dadurch gekennzeichnet**,
daß der Schieber (66) eine erste und zweite Öffnung (74, 75) aufweist, in dessen erste Öffnung (74) ein außerhalb der Längsachse (Y) am Ventilkolben (56) ausgebildeter erster Zapfen (76) eingreift und in dessen zweite Öffnung (75) ein außerhalb der Drehachse (X) am Betätigungselement (73) ausgebildeter zweiter Zapfen (77) eingreift.

18. Brühgetränkemaschine nach Anspruch 16,
**dadurch gekennzeichnet**,
daß der Schieber (66) am Deckel (86) des Brühkopfes (35) geführt wird.

19. Brühgetränkemaschine nach Anspruch 15,
**dadurch gekennzeichnet**,
daß das Betätigungselement (73) am Rand eines Vorratsbehälters der Brühgetränkemaschine geführt wird und daß der Vorratsbehälter im wesentlichen bis zum oberen Rand der Brühgetränkemaschine verläuft.

20. Brühgetränkemaschine nach Anspruch 19,
**dadurch gekennzeichnet**,
daß der Vorratsbehälter von einem Deckel (9) verschließbar ist, der das Betätigungselement (73) nach außen abdeckt.

21. Brühgetränkemaschine nach Anspruch 19,
**dadurch gekennzeichnet**,
daß der Vorratsbehälter von einem Deckel (9) verschließbar ist, und daß der Deckel (9) eine Öffnung (78) aufweist, durch die das Betätigungselement (73) von außen betätigbar ist.

## Claims

1. A beverage brewing machine wherein the brewing action is performed by cold water flowing from a supply reservoir into an electric continuous flow heater, where it is heated, and the resulting brewing water is conducted through a feed pipe (36) to a distribution device (37, 42) containing a first (41) and a second (43) outlet opening, from where the brewing water, on the one hand, flows through the first outlet opening (41) onto the upper surface (53) of a product (13), preferably tea leaves or ground coffee, contained in a brewing unit (2), from which, after extraction of the product (13), the so prepared brewed beverage finally discharges into a storing tank (31), and from where brewing water, on the other hand, can also flow to the second outlet opening (43) after having surmounted a partition wall (40), this portion of the brewing water propagating also along a path (27) other than through the upper surface (53) of the product (13) into the storing tank (31), and wherein the distribution device is provided as a closed brewing tip (35) shaped like a chamber, the partition wall (40) subdivides the brewing tip (35) into a main chamber (37) and a secondary chamber (42), the entire brewing water flows from the feed pipe (36) through the main chamber (37) into the brewing tip (35), and the brewing tip (35) is in constant communication with the atmosphere,
**characterized** in that the connection of the brewing tip (35) with the atmosphere is established by a pipe (45), which extends through the bottom (38) of the brewing tip (35) and the free end (46) of which is disposed above the upper edge (39) of the partition wall (40), and in that the pipe (45) is fitted in the main chamber (37) close to the first outlet opening (41).

2. A beverage brewing machine as claimed in claim 1,
**characterized** in that the surface of the second outlet opening (43) is smaller than the surface of the first outlet opening (41).

3. A beverage brewing machine as claimed in claim 2,
**characterized** in that the dimensions of the first (41) and the second (43) outlet opening are chosen such that, after the first overflow of brewing water from the main chamber (37) into the secondary chamber (42), 10 % to 40 % of the brewing water which is then delivered by the continuous flow heater discharges through the second outlet opening (43).

4. A beverage brewing machine as claimed in claim 1,
**characterized** in that the second outlet opening (43) is directed to the inner edge (20) of the brewing unit (2), and in that a channel (27) is provided at the inner edge (20) which forms the other path for the brewing water.

5. A beverage brewing machine as claimed in claim 4,
**characterized** in that in case a water-permeable filter insert (14) containing the product (13) is inserted into the brewing unit (2), the channel (27) is formed by the outside of the filter insert (14) and by the inner edge (20) of the brewing unit (2), with the width (W) of the channel (27) being determined by spacer elements (32) and sized such that the product (13) is wetted laterally by the brewing water.

6. A beverage brewing machine as claimed in claim 5,
**characterized** in that the channel (27) extends over wide ranges or entirely along the circumference of the inner edge (20) of the brewing unit (2).

7. A beverage brewing machine as claimed in claim 4,
**characterized** in that, on the inlet side, the channel (27) includes a collecting groove (26) which extends beneath the upper edge of the filter insert (14) and which is opposite to the second outlet opening (43) and, on the outlet side, terminates into the outlet opening (30) of the brewing unit (2).

8. A beverage brewing machine as claimed in claim 2,
**characterized** in that the continuous flow heater delivers a quantity of 3.5 to 6 millilitres per second, in that the total surface of main chamber (37) and secondary chamber (42) amounts to between 20 cm² and 40 cm², in that the ratio of the surfaces of main chamber (37) and secondary chamber (42) is in the order of 4 : 1 to 8 : 1, in that the height (39) of the partition wall (40) is in the range of 6 mm to 12 mm, in that the surface of the first outlet opening (41) ranges between 7 mm² and 14 mm², and in that the surface of the second outlet opening (43) ranges between 4 mm² and 13 mm².

9. A beverage brewing machine as claimed in claim 8,
**characterized** in that the continuous flow heater supplies a quantity of 4.5 millilitres per second at a power of 1250 watts approximately, in that the total surface of main chamber (37) and secondary chamber (42) amounts to 30 cm² approximately, in that the surface of the main chamber (37) amounts to 25 cm² approximately and the surface of the secondary chamber (42) amounts to 4.5 cm² approximately, in that the height of the partition wall (40) is 8 mm approximately, the surface of the first outlet opening (41) amounts to 11 mm² approximately and the surface of the second outlet opening (43) amounts to 8 mm² approximately.

10. A beverage brewing machine as claimed in claim 1,
**characterized** in that at least one baffle (51) is fitted in the main chamber (37) containing at least one aperture (52) which lies in about at the level of the bottom (38) of the brewing tip (35).

11. A beverage brewing machine as claimed in claim 1,
**characterized** in that a valve (54) is provided in the brewing tip (35) which permits adjusting the discharge quantity of the brewing water along the other path (27).

12. A beverage brewing machine as claimed in claim 11,
**characterized** in that the valve (54) which permits reducing the cross-sectional surface of the second outlet opening (43) is provided at the second outlet opening (43).

13. A beverage brewing machine as claimed in claim 12,
**characterized** in that the valve (54) is composed of a valve seat (55) provided in the housing of the brewing tip (35) and cooperating with a valve piston (56) which can sealingly close the valve seat (55), and in that the valve piston (56) and the valve seat (55) have an aperture (57, 58) each, the apertures determining the opening cross-section of the valve (54) depending on the degree they overlap each other.

14. A beverage brewing machine as claimed in claim 13,
**characterized** in that the valve seat (55) is formed by a bore in which a cylindrical portion (59) of the valve piston (56) is sealedly guided, in that both the bore (55) and the cylindrical portion (59) have an aperture (57, 58) each, and in that, on rotation of the valve piston (56) about its longitudinal axis (Y), the aperture (57) of the valve piston (56) is in alignment with the aperture (58) of the valve seat (55).

15. A beverage brewing machine as claimed in claim 14,
**characterized** in that the valve piston (56) is adapted to be rotated about its longitudinal axis (Y) by an actuating element (73) to control the valve (54).

16. A beverage brewing machine as claimed in claim 15,
**characterized** in that the actuating element (73) is rotatable about an axis of rotation (X) shifted in parallel to the longitudinal axis (Y), and in that the transmission of the rotation of the actuating element (73) to the valve piston (56) is effected by a slide (66) which makes catch eccentrically at the latter piston (56).

17. A beverage brewing machine as claimed in claim 16,
**characterized** in that the slide (66) includes a first and a second opening (74, 75), a first pin (76) provided outside the longitudinal axis (Y) on the valve piston (56) engaging into the first opening (74), and a second pin (77) provided outside the axis of rotation (X) on the actuating element (73) engaging into the second opening (75).

18. A beverage brewing machine as claimed in claim 16,
**characterized** in that the slide (66) is guided at the cover (86) of the brewing tip (35).

19. A beverage brewing machine as claimed in claim 15,
**characterized** in that the actuating element (73) is guided at the edge of a supply reservoir of the beverage brewing machine, and in that the supply reservoir extends substantially up to the upper edge of the beverage brewing machine.

20. A beverage brewing machine as claimed in claim 19,
**characterized** in that the supply reservoir is closable by a cover (9) which covers the actuating element (73) towards the outside.

21. A beverage brewing machine as claimed in claim 19,
**characterized** in that the supply reservoir is closable by a cover (9), and in that the cover (9) contains an opening (78) through which the actuating element (73) is operable from the outside.

## Revendications

1. Machine pour la préparation de boissons dans laquelle l'ébouillantage est produit grâce au fait que de l'eau froide s'écoule depuis un réservoir dans un chauffe-eau instantané électrique, y est chauffée, et l'eau bouillante qui en résulte est amenée par l'intermédiaire d'une conduite montante (36) à un dispositif distributeur (37,42) présentant un premier (41) et un second (43) orifice de sortie, à partir duquel l'eau bouillante coule d'une part par l'intermédiaire du premier orifice de sortie (41) sur la surface (53) d'un ingrédient (13), de préférence des feuilles de thé ou de la poudre de café, qui est contenu dans une unité d'infusion (2) depuis laquelle, après avoir extrait l'ingrédient (13), la boisson ainsi préparée s écoule enfin dans un réceptacle (31), et à partir duquel d'autre part de l'eau bouillante peut s'écouler vers le second orifice de sortie (43) après avoir surmonté une paroi de séparation (40), cette part d'eau bouillante parvenant dans le réceptacle (31) par une autre voie (27) que par la surface (53) de l'ingrédient (13), et dans laquelle le dispositif distributeur est réalisé en tant que tête d'ébouillantage (35) fermée en forme de chambre, la paroi de séparation (40) divise la tête d'ébouillantage (35) en une chambre principale (37) et une chambre secondaire (42), la totalité de l'eau bouillante s'écoule depuis la conduite montante (36) par l'intermédiaire de la chambre principale (37) dans la tête d'ébouillantage (35), et dans laquelle la tête d'ébouillantage (35) est en liaison permanente avec l'atmosphère, caractérisée en ce que la liaison de la tête d'ébouillantage (35) avec l'atmosphère est formée par un tube (45) traversant le fond (38) de la tête d'ébouillantage (35), dont l'extrémité libre (46) se trouve au-dessus de l'arête supérieure (39) de la paroi de séparation (40) et en ce que le tube (45) est monté dans la chambre principale (37) à proximité du premier orifice de sortie (41).

2. Machine pour la préparation de boissons selon la revendication 1, caractérisée en ce que la surface du second orifice de sortie (43) est plus petite que la surface du premier orifice de sortie (41).

3. Machine pour la préparation de boissons selon la revendication 2, caractérisée en ce que les dimensions du premier (41) et du second (43) orifice de sortie sont telles qu'après le premier débordement de l'eau bouillante hors de la chambre principale (37) dans la chambre secondaire (42), 10% à 40% de l'eau bouillante transportée ensuite par le chauffe-eau instantané s'écoule à travers le second orifice de sortie (43).

4. Machine pour la préparation de boissons selon la revendication 1, caractérisée en ce que le second orifice de sortie (43) est dirigé sur le bord intérieur (20) de l'unité d'infusion (2) et en ce que sur le bord intérieur (20) est réalisé un canal (27) qui forme l'autre voie pour l'eau bouillante.

5. Machine pour la préparation de boissons selon la revendication 4, caractérisée en ce que dans le cas où l'on utilise dans l'unité d'infusion (2) un insert de filtre (14) perméable à l'eau, qui contient l'ingrédient (13), le canal (27) est formé par la face extérieure de l'insert de filtre (14) et par le bord intérieur (20) de l'unité d'infusion (2), la largeur (W) du canal (27) étant déterminée par des écarteurs (32) et dimensionnée de telle manière qu'un mouillage latéral de l'ingrédient (13) est produit par l'eau bouillante.

6. Machine pour la préparation de boissons selon la revendication 5, caractérisée en ce que le canal (27) s'étend sur de larges zones ou totalement le long de la périphérie du bord intérieur (20) de l'unité d'infusion (2).

7. Machine pour la préparation de boissons selon la revendication 4, caractérisée en ce que le canal (27) présente du côté de son entrée une rigole collectrice (26) qui s'étend au-dessous de l'arête supérieure de l'insert de filtre (14) et qui fait face au second orifice de sortie (43) et débouche du côté de la sortie dans l'ouverture de sortie (30) de l'unité d'infusion (2).

8. Machine pour la préparation de boissons selon la revendication 2, caractérisée en ce que le chauffe-eau instantané fournit un débit de 3,5 à 6 millilitres par seconde, en ce que la surface totale des chambres principale (37) et secondaire (42) est comprise entre 20 cm² et 40 cm², en ce que le rapport des surfaces de la chambre principale (37) et de la chambre secondaire (42) est comprise dans la plage de 4:1 à 8:1, en ce que la hauteur (39) de la paroi de séparation (40) est comprise dans la plage de 6 mm à 12 mm, en ce que la surface du premier orifice de sortie (41) est comprise entre 7 mm² et 14 mm² et en ce que la surface du second orifice de sortie (43) est comprise entre 4 mm² et 13 mm².

9. Machine pour la préparation de boissons selon la revendication 8, caractérisée en ce que le chauffe-eau instantané fournit un débit d'environ 4,5 millilitres par seconde pour une puissance électrique d'environ 1250 watts, en ce que la surface totale des chambres principale (37) et secondaire (42) est d'environ 30 cm², en ce que la surface de la chambre principale (37) est d'environ 25 cm², en ce que la surface de la chambre secondaire (42) est d'environ 4,5 cm², en ce que la hauteur de la paroi de séparation (40) est d'environ 8 mm, la surface du premier orifice de sortie (41) est d'environ 11 mm² et la surface du second orifice de sortie (43) est d'environ 8 mm².

10. Machine pour la préparation de boissons selon la revendication 1, caractérisée en ce que dans la chambre principale (37) est agencée au moins une paroi de rebondissement (51) qui présente chacune au moins un passage (52) qui se trouve approximativement au niveau du fond (38) de la tête d'ébouillantage (35).

11. Machine pour la préparation de boissons selon la revendication 1, caractérisée en ce que dans la tête d'ébouillantage (35) est réalisée une soupape (45) qui permet de régler la quantité d'eau bouillante qui s'écoule par l'autre voie (27).

12. Machine pour la préparation de boissons selon la revendication 11, caractérisée en ce que la soupape (54) est formée au niveau du second orifice de sortie (43), de sorte que la surface de passage du second orifice de sortie (43) peut être modifiée.

13. Machine pour la préparation de boissons selon la revendication 12, caractérisée en ce que la soupape (54) est constituée par un siège de soupape (55) réalisé dans le boîtier de la tête d'ébouillantage (35), ledit siège de soupape (55) coopérant avec un piston de soupape (56) susceptible d'être fermé de façon étanche par celui-ci, et en ce que tant sur le piston de soupape (56) que sur le siège de soupape (55) est réalisé un percement (57, 58) à travers lequel la surface de passage de la soupape (54) est définie selon le degré de chevauchement de ces percements.

14. Machine pour la préparation de boissons selon la revendication 13, caractérisée en ce que le siège de soupape (55) est formé par un perçage ajusté dans lequel un tronçon (59) cylindrique du piston de soupape (56) est guidé de façon étanche, en ce que tant sur le perçage ajusté (55) que sur le tronçon cylindrique (59) est formé un percement respectif (57, 58) et en ce que lorsqu'on fait tourner le piston de soupape (56) autour de son axe longitudinal (Y), le percement (57) du piston de soupape (56) est en alignement avec le percement (58) du siège de soupape (55).

15. Machine pour la préparation de boissons selon la revendication 14, caractérisée en ce que pour commander la soupape (54), le piston de soupape (56) est rotatif autour de son axe longitudinal (Y) grâce à un élément d'actionnement (73).

16. Machine pour la préparation de boissons selon la revendication 15, caractérisée en ce que l'élément d'actionnement (73) est rotatif autour d'un axe de rotation (X) décalé parallèlement à l'axe longitudinal (Y) et en ce que la transmission du mouvement de rotation de l'élément d'actionnement (73) sur le piston de soupape (56) est produit par un coulisseau (66) attaquant ce dernier (56) de manière excentrique.

17. Machine pour la préparation de boissons selon la revendication 16, caractérisée en ce que le coulisseau (66) présente une première et une seconde ouverture (74, 75), dans la première ouverture (74) duquel s'engage un premier tenon (76) formé sur le piston de soupape (56) à l'extérieur de l'axe longitudinal (Y), et dans la seconde ouverture (75) duquel s'engage un second tenon (77) formé sur l'élément d'actionnement (73) à l'extérieur de l'axe de rotation (X).

18. Machine pour la préparation de boissons selon la revendication 17, caractérisée en ce que le coulisseau (66) est guidé sur le couvercle (86) de la tête d'ébouillantage (35).

19. Machine pour la préparation de boissons selon la revendication 15, caractérisée en ce que l'élément d'actionnement (73) est guidé sur le bord d'un réservoir de la machine pour la préparation de boissons et en ce que le réservoir s'étend sensiblement jusqu'au bord supérieur de la machine pour la préparation de boissons.

20. Machine pour la préparation de boissons selon la revendication 19, caractérisée en ce que le réservoir est susceptible d'être fermé par un couvercle (9) qui recouvre l'élément d'actionnement (73) vers l'extérieur.

21. Machine pour la préparation de boissons selon la revendication 19, caractérisée en ce que le réservoir est susceptible d'être fermé par un couvercle (9) et en ce que le couvercle (9) présente une ouverture (78) à travers laquelle l'élément d'actionnement (73) est susceptible d'être actionné depuis l'extérieur.
